# EUROPEAN PATENT APPLICATION

(11) **EP 4 372 639 A1**
(43) Date of publication of application: **22.05.2024**
(21) Application number: 23209220.5
(22) Date of filing: 10.11.2023
(51) Int. Cl.: G06Q 10/06, G06Q 10/0631, G06Q 10/20

(54) **CRITICAL PATH IDENTIFICATION FOR PRECEDENCE NETWORKS IN AIRCRAFT MAINTENANCE**

(30) Priority: 21.11.2022 US 202217991521
(71) Applicant: The Boeing Company, Arlington, VA 22202 (US)
(72) Inventor: LIM, Jaeku, Arlington, 22202 (US); GUNASEKARA, Samith P., Arlington, 22202 (US); SCHENCK, Bradley M., Arlington, 22202 (US); CAROZZI, George, Arlington, 22202 (US); VENKATACHALAM, Sankara Subramanian, Arlington, 22202 (US)
(74) Representative: Morrall, Jonathan Ian McLachlan

(57) **Abstract**

Techniques relating to vehicle maintenance are disclosed. These techniques include selecting a first data element and generating a plurality of clusters of data elements relating to maintenance of a vehicle, based on clustering data elements in one or more layers in a data hierarchy that depend a the first layer, and identifying one or more jobs relating to maintenance of the vehicle in each of the plurality of clusters, based on: (i) a start date for the respective job or (ii) an end date for the respective job. The techniques further include generating a path for each of the plurality of clusters based on the identified one or more jobs, each respective path comprising a plurality of jobs, approximating a critical path relating to maintenance of the vehicle based on the generated paths for each of the plurality of clusters, and maintaining the vehicle using the approximated critical path.

## Description

### INTRODUCTION

Aspects of the present disclosure relate to vehicle maintenance, and more specifically to critical path identification in vehicle maintenance, repair, and overhaul (MRO).

MRO for vehicles (e.g., aircraft) is logistically very challenging. MRO for a given vehicle or group of vehicles can include many, many, jobs, which depend on each other and outside activities or requirements. Further, data describing these jobs can be maintained in large number of different electronic data repositories and data sources. And data describing these jobs may not identify dependencies or job sequencing information, making MRO planning extremely difficult and leading to poor MRO outcomes. In particular, identifying a critical path for MRO for a given vehicle or group of vehicles is very challenging, especially where the MRO data does not include inherent information about job sequence order or dependencies.

### BRIEF SUMMARY

Embodiments include a method. The method includes selecting a first data element from a first layer in a data hierarchy including data relating to maintenance of a vehicle including job data. The method further includes generating a plurality of clusters of data elements relating to maintenance of the vehicle, based on clustering data elements in one or more layers in the data hierarchy that depend from the first layer. The method further includes identifying one or more jobs relating to maintenance of the vehicle in each of the plurality of clusters, based on at least one of: (i) a start date for the respective job or (ii) an end date for the respective job. The method further includes generating a path for each of the plurality of clusters based on the identified one or more jobs, each respective path comprising a plurality of jobs, approximating a critical path relating to maintenance of the vehicle based on the generated paths for each of the plurality of clusters, and displaying steps for maintaining the vehicle determined by the critical path.

Embodiments further include a non-transitory computer-readable medium containing computer program code that, when executed by operation of one or more computer processors, performs operations. The operations include selecting a first data element from a first layer in a data hierarchy including data relating to maintenance of a vehicle including job data. The operations further include generating a plurality of clusters of data elements relating to maintenance of the vehicle, based on clustering data elements in one or more layers in the data hierarchy that depend from the first layer. The operations further include identifying one or more jobs relating to maintenance of the vehicle in each of the plurality of clusters, based on at least one of: (i) a start date for the respective job or (ii) an end date for the respective job. The operations further include generating a path for each of the plurality of clusters based on the identified one or more jobs, each respective path including a plurality of jobs, approximating a critical path relating to maintenance of the vehicle based on the generated paths for each of the plurality of clusters, and displaying steps for maintaining the vehicle determined by the critical path.

Embodiments further include a system, including a computer processor and a memory having instructions stored thereon which, when executed on the computer processor, performs operations. The operations include selecting a first data element from a first layer in a data hierarchy including data relating to maintenance of a vehicle including job data. The operations further include generating a plurality of clusters of data elements relating to maintenance of the vehicle, based on clustering data elements in one or more layers in the data hierarchy that depend from the first layer. The operations further include identifying one or more jobs relating to maintenance of the vehicle in each of the plurality of clusters, based on at least one of: (i) a start date for the respective job or (ii) an end date for the respective job. The operations further include generating a path for each of the plurality of clusters based on the identified one or more jobs, each respective path including a plurality of jobs, approximating a critical path relating to maintenance of the vehicle based on the generated paths for each of the plurality of clusters, and displaying steps for maintaining the vehicle determined by the critical path.

Embodiments further include a method. The method includes selecting a first data element from a first layer in a data hierarchy including data relating to maintenance of a vehicle. The method further includes generating a plurality of clusters of data elements relating to maintenance of the vehicle, based on clustering data elements in one or more layers in the data hierarchy that depend from the first layer. The method further includes identifying one or more jobs relating to maintenance of the vehicle in each of the plurality of clusters, based on at least one of: (i) a start date for the respective job or (ii) an end date for the respective job. The method further includes generating a path for each of the plurality of clusters based on the identified one or more jobs, each respective path comprising a plurality of jobs, approximating a critical path relating to maintenance of the vehicle based on the generated paths for each of the plurality of clusters, and maintaining the vehicle using the approximated critical path.

Embodiments further include a non-transitory computer-readable medium containing computer program code that, when executed by operation of one or more computer processors, performs operations. The operations include selecting a first data element from a first layer in a data hierarchy including data relating to maintenance of a vehicle. The operations further include generating a plurality of clusters of data elements relating to maintenance of the vehicle, based on clustering data elements in one or more layers in the data hierarchy that depend from the first layer. The operations further include identifying one or more jobs relating to maintenance of the vehicle in each of the plurality of clusters, based on at least one of: (i) a start date for the respective job or (ii) an end date for the respective job. The operations further include generating a path for each of the plurality of clusters based on the identified one or more jobs, each respective path including a plurality of jobs, approximating a critical path relating to maintenance of the vehicle based on the generated paths for each of the plurality of clusters, and maintaining the vehicle using the approximated critical path.

Embodiments further include a system, including a computer processor and a memory having instructions stored thereon which, when executed on the computer processor, performs operations. The operations include selecting a first data element from a first layer in a data hierarchy including data relating to maintenance of a vehicle. The operations further include generating a plurality of clusters of data elements relating to maintenance of the vehicle, based on clustering data elements in one or more layers in the data hierarchy that depend from the first layer. The operations further include identifying one or more jobs relating to maintenance of the vehicle in each of the plurality of clusters, based on at least one of: (i) a start date for the respective job or (ii) an end date for the respective job. The operations further include generating a path for each of the plurality of clusters based on the identified one or more jobs, each respective path including a plurality of jobs, approximating a critical path relating to maintenance of the vehicle based on the generated paths for each of the plurality of clusters, and maintaining the vehicle using the approximated critical path.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1A** illustrates an environment for MRO for an aircraft, according to one embodiment.
**FIG. 1B** illustrates a data hierarchy for MRO for an aircraft, according to one embodiment.
**FIG. 2** is a block diagram illustrating an MRO controller for identifying job precedence for MRO for an aircraft, according to one embodiment.
**FIG. 3** is a flowchart illustrating approximating a critical path for MRO for an aircraft, according to one embodiment.
**FIG. 4** is a flowchart illustrating clustering for approximating a critical path for MRO for an aircraft, according to one embodiment.
**FIG. 5A** illustrates a user interface (UI) for approximating a critical path for MRO for an aircraft, according to one embodiment.
**FIG. 5B** further illustrates a UI for approximating a critical path for MRO for an aircraft, according to one embodiment.
**FIG. 5C** illustrates a further UI for approximating a critical path for MRO for an aircraft, according to one embodiment.
**FIG. 5D** illustrates another further UI for approximating a critical path for MRO for an aircraft, according to one embodiment.
**FIG. 6A** is a flowchart illustrating work management using job precedence for MRO for an aircraft, according to one embodiment.
**FIG. 6B** illustrates a UI for work management using job precedence for MRO for an aircraft, according to one embodiment.
To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

In the following description, details are set forth by way of example to facilitate an understanding of the disclosed subject matter. It should be apparent to a person of ordinary skill in the field, however, that the disclosed implementations are exemplary and not exhaustive of all possible implementations. Thus, it should be understood that reference to the described examples is not intended to limit the scope of the disclosure. Any alterations and further modifications to the described devices, instruments, methods, and any further application of the principles of the present disclosure are fully contemplated as would normally occur to one skilled in the art to which the disclosure relates. In particular, it is fully contemplated that the features, components, and/or steps described with respect to one implementation may be combined with the features, components, and/or steps described with respect to other implementations of the present disclosure.

In an embodiment, MRO can be significantly improved by identifying a critical path for jobs needed to complete an MRO task or tasks. For example, one or more techniques disclosed herein can be used to identify a critical path by identifying the longest path (in time) from start to finish of a cluster of MRO jobs. For example, the cluster can relate to a large number of jobs for a given layer in a data hierarchy. The earliest and latest date and time values can be read from job data (e.g., planned and unplanned job data), and used to construct a longest path for each layer in multiple layers of MRO data (e.g., level 1, level 2, and level 3 data). The identified paths can then be used to approximate a global critical path and minimum time necessary to complete an entire MRO task. In an embodiment, critical paths can be determined locally for each layer in a data hierarchy (e.g., each milestone), and then connected together to form a global path solution.

Further, filtering can be used to reduce the number of job nodes in a UI presenting a precedence network diagram. The filtering applies to any combination of job types, including: COMPLETE, STARTED, OPEN, HOLD, UNPLANNED. Filtering can also be used to view only a critical path. A UI can also provide an ability to view a specific job path by selecting a combination of level data (e.g., level 1, level 2, and level 3 data). A critical path, or another suitable path, can be displayed as part of the UI. In an embodiment, displaying the critical path can include presenting the path on screen (e.g., on a graphical UI (GUI)), printing the critical path (e.g., on paper or another suitable medium), or displaying the path in any other suitable manner.

In an embodiment, a critical path can further be used for work management. Critical path information can be used to populate a UI used to assign employees to various jobs to complete an MRO task. A manager, or other suitable personnel, can use the UI to identify employees and assign them to jobs needed to ensure the critical path is completed as quickly as possible, to avoid delays in the MRO task.

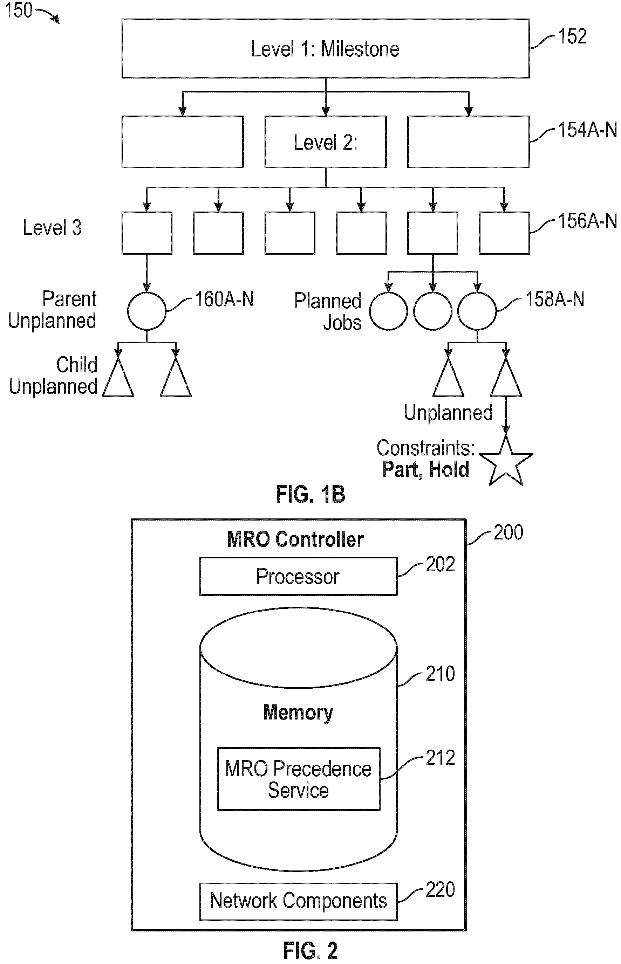

In an embodiment, one or more of these techniques provide significant technical advantages. For example, existing MRO techniques are not suitable to process disjointed MRO data that does not include dependency data (e.g., between a milestone and a predecessor or successor milestone). Further, existing MRO techniques lack the ability to process hierarchical MRO data (e.g., as described below in relation to FIG. 1B). One or more techniques described herein solve these problems by approximating a critical path for an MRO task from disjointed MRO data.

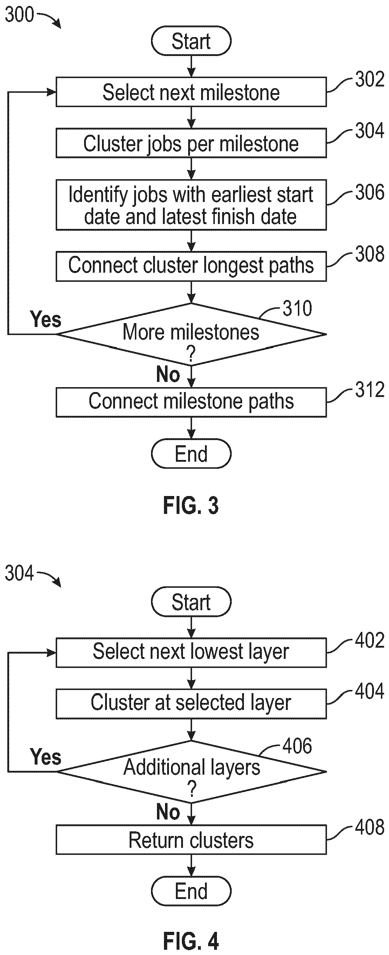

Further, clustering data at a per-layer basis for hierarchical MRO job data provides a significant improvement in computational flexibility efficiency. Processing all job data together (e.g., for a given milestone or collection of milestones), as might be done on some solutions, would require a very large amount of memory and computational resources. Instead, clustering the job data on a per-layer basis, as described further below in relation to FIG. 3, allows for approximation of a critical path with significantly less memory and computational resources. Individual longest paths can be calculated, for a given data layer, using multiple compute nodes (e.g., in parallel or sequentially). Each of these compute nodes need only have sufficient memory and computational resources to handle the jobs associated with the given data layer, rather than needing the much larger quantity of memory and computational resources that would be needed to handle all jobs associated with all layers. This allows for more flexible, and efficient, use of computational resources than a solution that processes all jobs together without clustering.

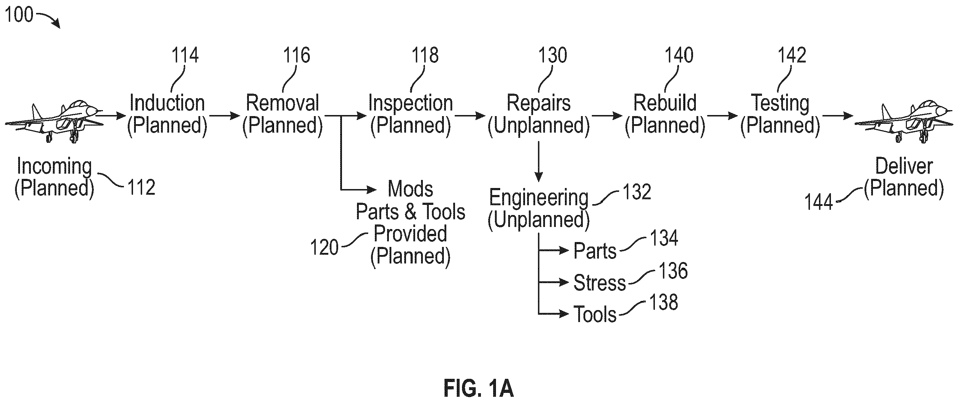

**FIG. 1A** illustrates an environment 100 for MRO for an aircraft, according to one embodiment. In an embodiment, MRO involves numerous stages. Most of these stages are planned ahead, to allow for logistical planning. For example, a vehicle (e.g., an aircraft) can be planned to be incoming at a stage 112 where it is signed in and accepted from the customer, and undergo induction at stage 114 where it is brought to a work station within the shop (e.g., an aircraft hangar). The vehicle can be planned to undergo removal at stage 116 where parts are removed, inspection at stage 118 where potential unplanned work is identified, and have parts and tools provided at stage 120.

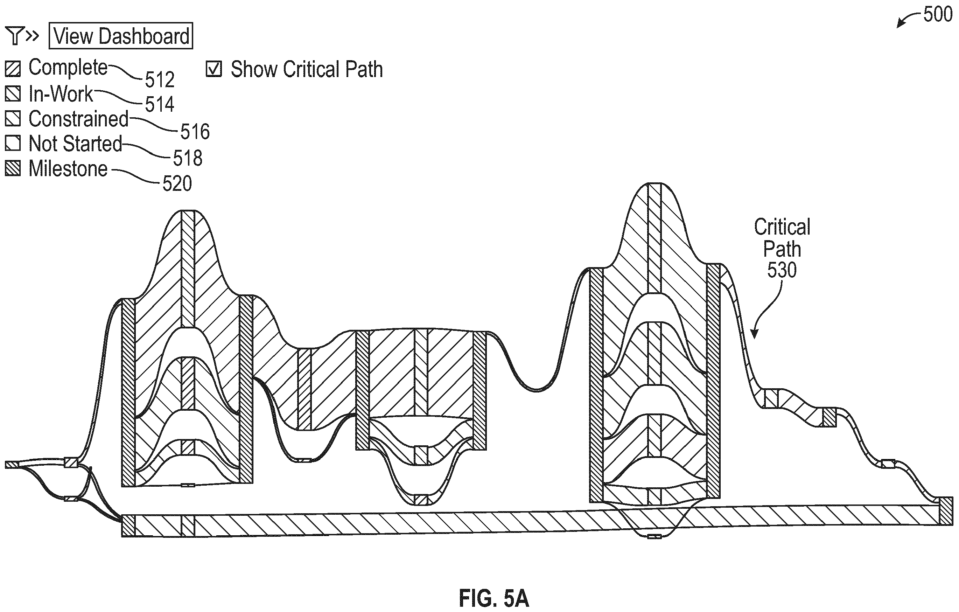

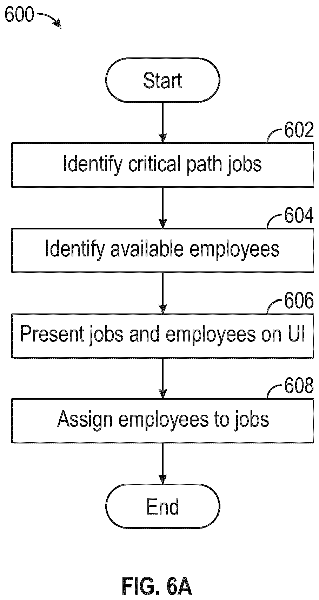

Some stages, however, are unplanned. For example, at a stage 130 the vehicle undergoes repairs. This can involve an unplanned engineering stage 132, which can require parts 134, stress testing 136, and tools 138. In an embodiment, the repairs stage 130 (e.g., the engineering stage 132) can involve a large number of jobs, with specific dependencies and sequencing between jobs. But this dependency and sequencing information may not be provided with the job data. As discussed below in relation to FIGS. 3-4, a suitable software service can use the job information to approximate a critical path among the jobs needed to complete the repairs stage. This critical path information can be presented to a user to assist in logistical planning and completion of the repairs stage (e.g., as illustrated below in relation to FIGS. 5A-D), can be used for work management by assigning employees to complete jobs in the critical path (e.g., as illustrated in relation to FIGS. 6A-B), and can be used in any other suitable manner.

In an embodiment, the environment 100 can further include additional planned stages, including a rebuild stage 140 where vehicle (e.g., aircraft) parts previously removed are reinstalled, a testing stage 142 where vehicle systems are verified as working properly, and a delivery stage 144 where the vehicle is signed off and returned to the customer. While the above is described in relation to MRO, as an example, one or more of these techniques can be applied to any suitable endeavor.

**FIG. 1B** illustrates a data hierarchy 150 for MRO for an aircraft, according to one embodiment. In an embodiment, the data hierarchy 150 describes job information for MRO. The data hierarchy 150 includes a top layer, with a level 1 data element 152. For example, the top layer data element 152 can relate to a milestone in the MRO. The top layer includes a number of next layer level 2 jobs 154A-N. For example, each of the level 2 jobs 154A-N can relate to a job that must be completed for the milestone 152 to be completed. The level 2 jobs can, for example, relate to a particular area control code (ACC).

In an embodiment, each of level 2 jobs 154A-N itself includes a number of lower layer level 3 jobs 156A-N. For example, each of the level 3 jobs 156A-N can relate to a job that must be completed for the respective level 2 job 154A-N to be completed. The level 3 jobs 156A-N can, for example, relate to a position (POS) within the aircraft. Further, each of the level 3 jobs 156A-N can include one or more planned jobs 158A-N and one or more unplanned jobs 160A-N. For example, the unplanned jobs 160A-N can each include a parent unplanned aspect, and a child unplanned aspect. Further, the planned jobs 158A-N can themselves include one or more unplanned aspects and constraints (e.g., a PART constraint or a HOLD constraint).

**FIG. 2** is a block diagram illustrating an MRO controller 200 for identifying job precedence for MRO for an aircraft, according to one embodiment. In an embodiment, the MRO controller 200 includes a processor 202, a memory 210, and network components 220. The memory 210 may take the form of any computer-readable medium which may be non-transitory. The processor 202 generally retrieves and executes programming instructions stored in the memory 210. The processor 202 is representative of a single central processing unit (CPU), multiple CPUs, a single CPU having multiple processing cores, graphics processing units (GPUs) having multiple execution paths, and the like.

The network components 220 include the components necessary for MRO controller 200 to interface with a suitable communication network. For example, the network components 220 can include wired, WiFi, or cellular network interface components and associated software. Although the memory 210 is shown as a single entity, the memory 210 may include one or more memory devices having blocks of memory associated with physical addresses, such as random access memory (RAM), read only memory (ROM), flash memory, or other types of volatile and/or non-volatile memory.

The memory 210 generally includes program code for performing various functions related to use of the MRO controller 200. The program code is generally described as various functional "applications" or "modules" within the memory 210, although alternate implementations may have different functions and/or combinations of functions. Within the memory 210, an MRO precedence service 212 facilitates any, or all, of identifying a critical path for MRO jobs, presenting a UI illustrating the UI, and work management using the critical path. This is described further, below, with regard to FIGS. 3-7.

Although FIG. 2 depicts the MRO precedence service 212 as located in the memory 210, that representation is merely provided as an illustration for clarity. More generally, the MRO controller 200 may include one or more computing platforms, such as computer servers for example, which may be co-located, or may form an interactively linked but distributed system, such as a cloud-based system (e.g., a public cloud, a private cloud, a hybrid cloud, or any other suitable cloud-based system). As a result, the processor 202 and the memory 210 may correspond to distributed processor and memory resources within a computing environment. Thus, it is to be understood that the MRO precedence service 212 may be stored remotely from the MRO controller 200 within the distributed memory resources of a computing environment.

**FIG. 3** is a flowchart 300 illustrating approximating a critical path for MRO for an aircraft, according to one embodiment. At block 302, an MRO precedence service (e.g., the MRO precedence service 212 illustrated in FIG. 2) selects a next milestone. In an embodiment, the MRO precedence service approximates a critical path for an MRO task by identifying earliest and latest date-time value from all jobs within a milestone (e.g., a top level data layer as illustrated in FIG. 1B) organized and grouped into separate lower level clusters (e.g., level 2 and level 3 data layers illustrated in FIG. 1B). The MRO precedence service constructs a critical path for each milestone (e.g., in level 3, level 2, level 1 order), and then connects together the milestone paths to form a global critical path approximation (e.g., across milestones).

At block 304, the MRO precedence service clusters jobs per milestone. For example, the MRO precedence service can identify all jobs within each data layer for the milestone, and can cluster these jobs within each layer. This is discussed further, below, with regard to FIG. 4.

At block 306, the MRO precedence service identifies jobs with an earliest start date and latest finish date. For example, the MRO precedence service can identify, for each cluster created at block 304, the earliest and latest date-time values from job data in the cluster. In an embodiment, this identifies the job that must be started earliest, and that finishes latest, for the cluster. The MRO precedence service can identify start and finish dates for both unplanned, and planned jobs.

At block 308, the MRO precedence service connects the cluster longest paths. In an embodiment, as discussed above in relation to block 306, the MRO precedence service has identified the job(s) with the earliest start date and latest finish date for each cluster (e.g., for each data layer in the data hierarchy underneath the subject milestone). The MRO precedence service can use this to identify a longest path for each cluster. The MRO precedence service then connects these longest paths, across clusters, to create a longest path for the milestone. In an embodiment, this approximates a critical path for the milestone by identifying all jobs (e.g., at any level of the data hierarchy) that are on the longest path for the milestone.

At block 310, the MRO precedence service determines whether more milestones exist. For example, an MRO task for a vehicle (e.g., an aircraft) can include multiple milestones. In an embodiment, the MRO precedence service determines a longest path for each milestone. If an additional milestone exists, the flow returns to block 302 and the MRO precedence service selects the next milestone. If no additional milestone exists, the flow proceeds to block 312.

At block 312, the MRO precedence service connects milestone paths. In an embodiment, the MRO precedence service approximates a critical path for an MRO task across multiple milestones. The MRO precedence service can do this by connecting the longest path, for each milestone, to generate a global critical path for the MRO task.

**FIG. 4** is a flowchart illustrating clustering for approximating a critical path for MRO for an aircraft, according to one embodiment. In an embodiment, FIG. 4 corresponds with block 304 illustrated in FIG. 3. For example, FIG. 4 provides additional detail relating to clustering jobs per milestone. At block 402 an MRO precedence service (e.g., the MRO precedence service 212 illustrated in FIG. 2) selects a next lowest layer. In an embodiment, the MRO precedence service clusters by data layer, starting at the lowest layer. For example, the MRO precedence service can start at the level 3 layer illustrated in FIG.1B (e.g., the POS layer). This is merely an example, and the MRO precedence service can cluster in any suitable order of layers.

At block 404, the MRO precedence service clusters at the selected layer. For example, the MRO precedence service clusters all data elements for the layer (e.g., all jobs 156A-N for the level 3 layer illustrated in FIG. 1B). The MRO precedence can use any suitable clustering technique. For example, the MRO precedence service can cluster by data label (e.g., label name). Using the data hierarchy 150 illustrated in FIG. 1B as an example, the MRO precedence service can cluster based on a combination of a milestone label name (e.g., a milestone 152 illustrated in FIG. 1B) and a lower level label name (e.g., a level 2 layer or level 3 layer label name). The data can be clustered by adding additional labels for each layer, progressively becoming more and more specific. For example, the data can be clustered by milestone, and then by ACC, and then by POS. This is merely an example. In an embodiment, the MRO precedence service uses these clusters to identify an earliest start time and latest finish time within each cluster, as discussed above in relation to block 306 illustrated in FIG. 3.

At block 406, the MRO precedence service determines whether there are additional layers. For example, after clustering for a level 3 layer the MRO precedence service can move up the data hierarchy and cluster for a level 2 layer. If additional layers exist, the MRO precedence service returns to block 402. If no additional layers exist, the flow proceeds to block 408.

At block 408, the MRO precedence service returns the clusters. For example, the MRO precedence service can use the clusters to identify longest paths within each data layer, and within a given milestone. These can be combined to approximate a critical path for an MRO task, as discussed above in relation to FIG.3.

**FIG. 5A** illustrates a UI 500 for approximating a critical path for MRO for an aircraft, according to one embodiment. In an embodiment, a UI 500 presents a visual display of a summary view of a precedence network diagram for MRO. The UI 500 further presents a visual indication of an MRO critical path for a user, in the precedence network diagram. The UI 500 includes visual indications of the MRO jobs and status, including an indication of milestones 520, and an indication of which jobs are complete 512, in-work 514, constrained 516, and not-started 518. The critical path 530 is highlighted, to present to the user the jobs included in the critical path. Further, the UI presents a filter to allow the user to show, or not show, the critical path. In an embodiment, displaying the critical path can include presenting the path on screen (e.g., on a GUI), printing the critical path (e.g., on paper or another suitable medium), or displaying the path in any other suitable manner.

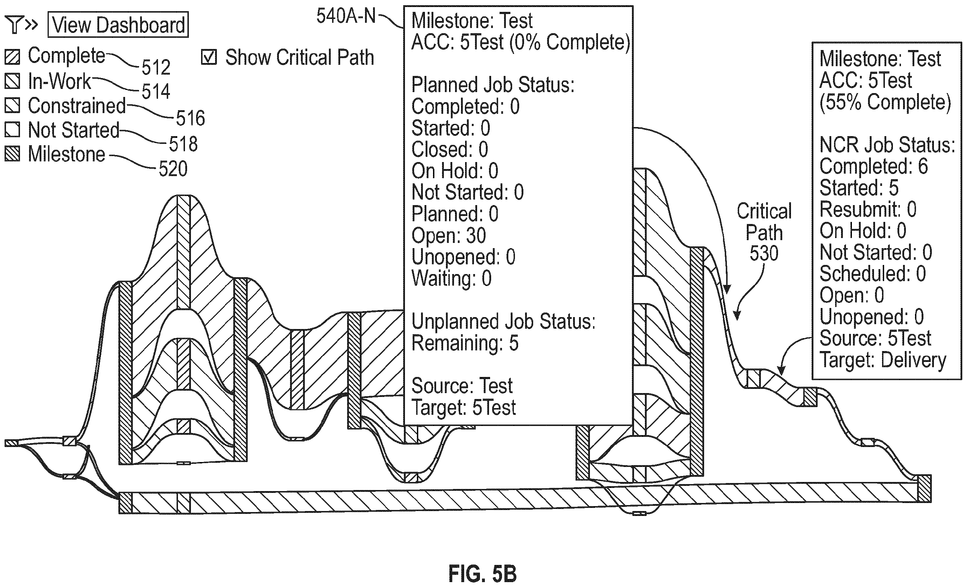

**FIG. 5B** further illustrates a UI for approximating a critical path for MRO for an aircraft, according to one embodiment. In an embodiment, a user can further select any of the elements of the UI (e.g., any milestone or MRO job) and can view attributes of the job. One or more tables 540A-N illustrate attributes of the jobs (e.g., of each milestone), including planned job status and unplanned job status. In an embodiment, the user can view the tables 540A-N by selecting an associated UI element (e.g., a job, milestone, or other suitable UI element).

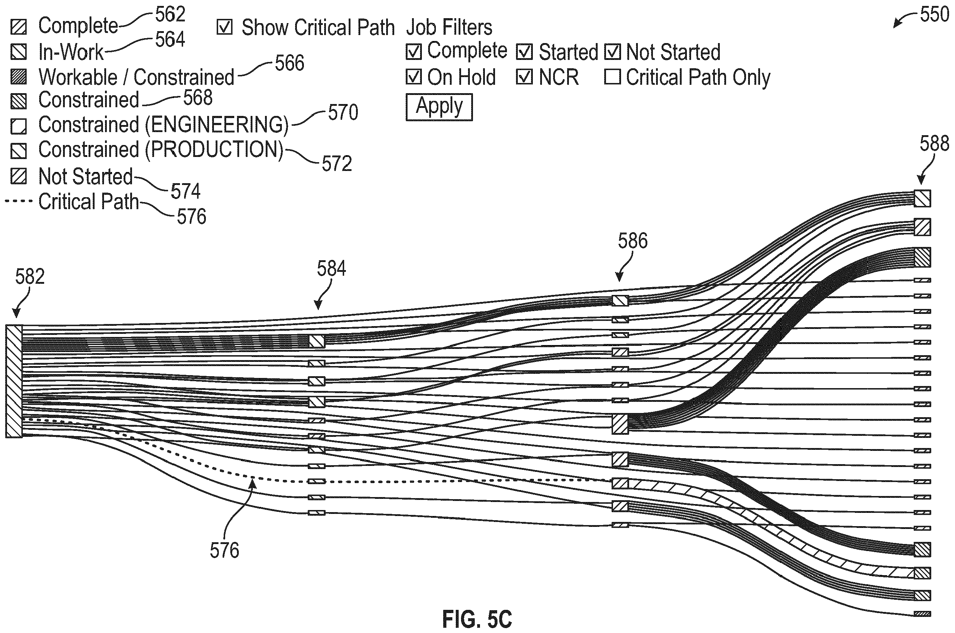

**FIG. 5C** illustrates a further UI 550 for approximating a critical path for MRO for an aircraft, according to one embodiment. In an embodiment, the UI 550 illustrates a critical path 576. A level 1 layer 582 (e.g., a milestone) leads to multiple level 2 layers 584 (e.g., ACCs) and multiple level 3 layers (e.g., POSs), along the paths. The UI 550 further provides information about the status of each layer, including whether it is complete 562, in-work 564, workable/constrained 566, constrained 568 (e.g., default constrained), constrained 570 (e.g., engineering constrained), or constrained 572 (e.g., production constrained), not started 574, or on the critical path 576. The UI 550 further includes numerous filters to show the critical path, or not, and to show complete jobs, on hold jobs, started jobs, NCR jobs (e.g., nonconformance record jobs), not started jobs, or critical path only. In an embodiment, NCR jobs are unplanned because they are identified during the MRO process (e.g., during the inspection stage 118 illustrated in FIG. 1A). Just as for the UI 500 illustrated in FIG. 5A, in an embodiment a user can select any of the UI elements in the UI 550 to display additional information about the element (e.g., job status information).

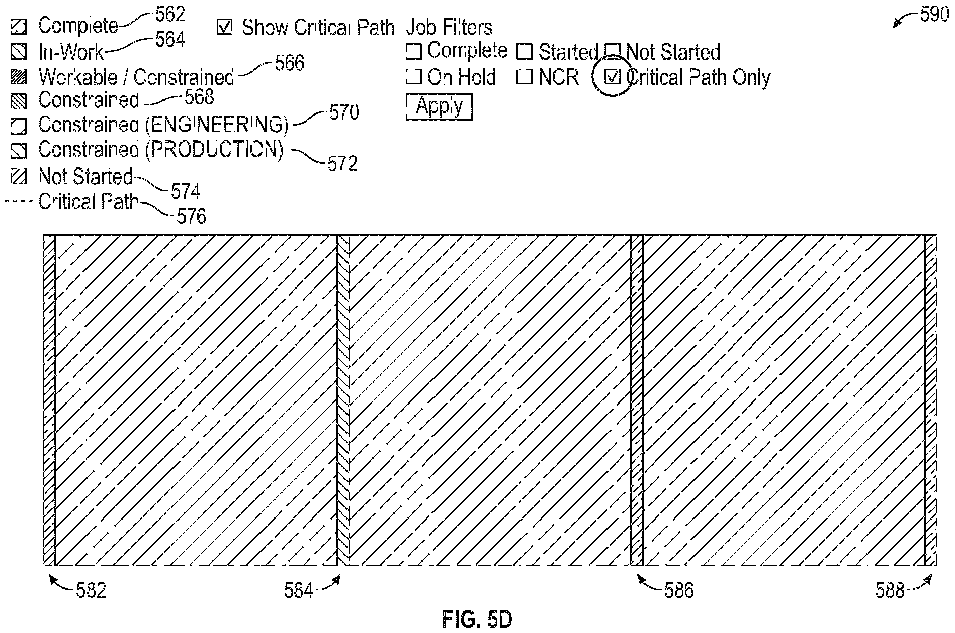

**FIG. 5D** illustrates another further UI 590 for approximating a critical path for MRO for an aircraft, according to one embodiment. In an embodiment, the UI 590 corresponds to the UI 550 illustrated in FIG. 5C with a "critical path only" filter checked. As illustrated, the UI 590 shows only the jobs on the critical path.

**FIG. 6A** is a flowchart 600 illustrating work management using job precedence for MRO for an aircraft, according to one embodiment. At block 602 an MRO precedence service (e.g., the MRO precedence service 212 illustrated in FIG. 2) identifies critical path jobs. In an embodiment, as discussed above in relation to FIGS. 3-5B, the MRO precedence service can approximate a critical path for an MRO task. At block 602, the MRO precedence service identifies the jobs in this path, across layers (e.g., across the data layers illustrated in FIG. 1B).

At block 604, the MRO precedence service identifies available employees. In an embodiment, the MRO precedence service identifies employees that are available to be scheduled to work on the jobs identified at block 602. For example, the MRO precedence service can retrieve a list of available employees from an external system (e.g., a management or human resources system). As another example, the MRO precedence service can be provided with a list of available employees (e.g., using an external file, an external data repository, or any other suitable source).

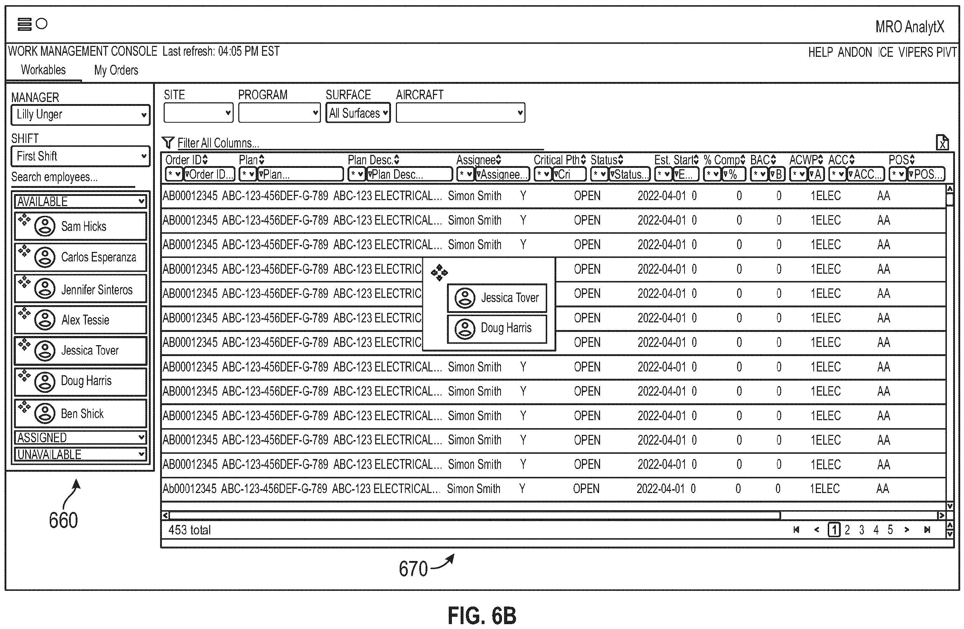

At block 606, the MRO precedence service presents the jobs and employees on a UI. In an embodiment, FIG. 6B illustrates an example of a suitable UI, in one embodiment. For example, FIG. 6B illustrates a work management console identifying available employees 660 and jobs 670 (e.g., critical path jobs).

At block 608, the MRO precedence service assigns employees to jobs. In an embodiment, a user (e.g., a manager or administrator) can schedule one or more of the employees 660 to complete each of the jobs 670. For example, as illustrated, a user can assign employees Jessica Tover and Doug Harris to complete one of the jobs 670. This is merely an example, and any suitable UI and technique can be used.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method, comprising:
selecting a first data element from a first layer in a data hierarchy comprising data relating to maintenance of a vehicle including job data (302)
generating a plurality of clusters of data elements relating to maintenance of the vehicle (304), based on clustering data elements in one or more layers in the data hierarchy that depend from the first layer (404);
identifying one or more jobs relating to maintenance of the vehicle in each of the plurality of clusters, based on at least one of: (i) a start date for the respective job or (ii) an end date for the respective job (306);
generating a path for each of the plurality of clusters based on the identified one or more jobs, each respective path comprising a plurality of jobs (308);
approximating a critical path relating to maintenance of the vehicle based on the generated paths for each of the plurality of clusters (308); and
displaying steps for maintaining the vehicle determined by the critical path (500).

2. The method of claim 1, wherein the vehicle is an aircraft and maintenance of the vehicle relates to maintenance, repair, and overhaul of the aircraft (100).

3. The method of claim 1 or 2, further comprising:
maintaining the vehicle using the approximated critical path, comprising:
generating a first graphical user interface (UI) for displaying the steps for maintaining the vehicle determined by the critical path (500).

4. The method of claim 3, wherein maintaining the vehicle using the approximated critical path further comprises:
generating a second graphical UI displaying a plurality of jobs (670) in the critical path and a plurality of employees (660) suitable to work on one or more of the plurality of jobs.

5. The method of claim 4, further comprising:
scheduling a first employee of the plurality of employees (660) to work on a first job of the plurality of jobs based on an input to the second graphical UI.

6. The method of any preceding claim, wherein identifying one or more jobs relating to maintenance of the vehicle in each of the plurality of clusters further comprises:
determining that each of the identified one or more jobs comprises at least one of: (i) an earliest start date for the respective cluster or (ii) a latest end date for the respective cluster (306).

7. The method of claim 6, wherein generating a plurality of clusters of data elements relating to maintenance of the vehicle, based on clustering data elements in one or more layers in the data hierarchy that depend from the first layer, further comprises:
identifying a second layer in the data hierarchy that depends from the first layer (402);
identifying a third layer in the data hierarchy that depends from the second layer (402); and
generating a respective cluster for each of the third layer and the second layer (404).

8. The method of claim 7, wherein the respective cluster for the third layer is generated before the respective cluster for the second layer based on the third layer depending from the second layer (404).

9. The method of any preceding claim, further comprising:
selecting a second data element from a first layer in a data hierarchy comprising data relating to maintenance of a vehicle (302);
generating a second plurality of clusters of data elements relating to maintenance of the vehicle (304), based on clustering data elements in one or more layers in the data hierarchy that depend from the first layer (404);
identifying a second one or more jobs relating to maintenance of the vehicle in each of the second plurality of clusters, based on at least one of: (i) a start date for the respective job or (ii) an end date for the respective job (306);
generating a path for each of the second plurality of clusters based on the identified one or more jobs, each respective path comprising a plurality of jobs (308); and
approximating a critical path relating to maintenance of the vehicle based on connecting a first path relating to the second plurality of clusters with a second path relating to the plurality of clusters (308).

10. The method of claim 9, further comprising:
generating the first path for the first data element based on the plurality of clusters (308); and
generating the second path for the second data element based on the second plurality of clusters (308).

11. A computer-readable medium containing computer program code that, when executed by operation of one or more computer processors, performs operations comprising the method of any of claims 1 to 10.

12. A system, comprising:
a computer processor; and
a memory having instructions stored thereon which, when executed on the computer processor, performs operations comprising the method of any of claims 1 to 10.
